# EUROPEAN PATENT SPECIFICATION

(11) **EP 3 148 786 B1**
(45) Date of publication and mention of the grant of the patent: **07.10.2020**
(21) Application number: 15734450.8
(22) Date of filing: 29.05.2015
(51) Int. Cl.: B29D 30/24, B29D 30/26

(54) **PROCESS AND APPARATUS FOR PRODUCING TYRES FOR VEHICLE WHEELS**
VERFAHREN UND VORRICHTUNG ZUR HERSTELLUNG VON REIFEN FÜR FAHRZEUGRÄDER
PROCÉDÉ ET APPAREIL DE PRODUCTION DE PNEUS POUR ROUES DE VÉHICULE

(30) Priority: 30.05.2014 IT MI20141003
(43) Date of publication of application: 05.04.2017
(73) Proprietor: Pirelli Tyre S.p.A., 20126 Milano (IT)
(72) Inventor: SABBATANI, Enrico, I-20126 Milano (IT); SACCHI, Sergio, I-23900 Lecco (IT); D'ORIA, Francesco, I-20126 Milano (IT)
(74) Representative: Porta & Consulenti Associati S.p.A.
(86) International application number: PCT/IB2015/054051
(87) International publication number: WO 2015/181783

(56) References cited:
- WO-A1-2004/060644
- WO-A1-2012/042359
- WO-A1-2013/093818
- DE-A1- 1 579 180
- DE-A1- 1 729 574
- DE-A1-102008 037 535
- DE-A1-102009 025 759

## Description

The present invention relates to a process and an apparatus for producing tyres for vehicle wheels.

Hereafter, the term "elastomeric" is used to refer to a composition comprising at least one elastomeric polymer and at least one reinforcing filler. Preferably, such a composition also comprises additives like, for example, a cross-linking agent and/or a plasticizer. Thanks to the presence of the cross-linking agent, such a material can be cross-linked by heating, so as to form the end product.

The terms "radial" and "axial" and the expressions "radially inner/outer" and "axially inner/outer" are used with reference to the radial direction of a forming support being used (i.e. to a direction perpendicular to the rotation axis of the aforementioned forming support) and to the axial direction of the forming support being used (i.e. to a direction parallel to the rotation axis of the aforementioned forming support). The terms "circumferential" and "circumferentially", on the other hand, are used with reference to the annular extension of the forming support.

Although hereafter explicit reference will be made to the deposition of a "carcass ply" on the forming support, it should be understood that what is described with reference to such a carcass ply is also valid in the case of deposition on the forming support of other semi-finished products in addition to the carcass ply (for example liner, under-liner, anti-abrasion layer), such semi-finished products being able to be provided in distinct layers or incorporated in a single semi-finished product.

A tyre for vehicle wheels generally comprises a carcass structure comprising at least one carcass ply formed of reinforcing cords incorporated in a matrix of elastomeric material. The carcass ply has end edges respectively engaged with annular anchoring structures. The latter are arranged in the areas of the tyre usually identified with the name "beads" and each of them is normally formed by a substantially circumferential annular insert on which at least one filling insert is applied, in a radially outer position thereof. Such annular inserts are commonly identified as "bead cores" and have the task of keeping the tyre firmly fixed to the anchoring seat specifically provided in the rim of the wheel, thus preventing, in operation, the radially inner end edge of the tyre from coming out from such a seat.

Specific reinforcing structures having the function of improving the torque transmission to the tyre can be provided at the beads.

A crown structure is associated in a radially outer position with respect to the carcass structure.

The crown structure comprises a belt structure and, in a radially outer position with respect to the belt structure, a tread band made of elastomeric material.

The belt structure comprises one or more belt layers arranged radially one on top of the other and having textile or metallic reinforcing cords with a crossed orientation and/or an orientation substantially parallel to the direction of circumferential extension of the tyre.

A layer of elastomeric material, called "under-belt", can be provided between the carcass structure and the belt structure, said layer having the function of making the radially outer surface of the carcass structure as uniform as possible for the subsequent application of the belt structure.

A so-called "under-layer" made of elastomeric material can be arranged between the tread band and the belt structure, the under-layer having properties suitable for ensuring a steady union of the tread band to the belt structure.

Respective sidewalls of elastomeric material are applied on the side surfaces of the carcass structure, each extending from one of the side edges of the tread band up to the respective annular anchoring structure to the beads.

The conventional processes for manufacturing tyres for vehicle wheels essentially provides for the tyre components listed above to be made separately from one another in the form of semi-finished products, to be then assembled on at least one suitable building drum.

With particular reference to the carcass structure, the building of the carcass structure typically comprises the deposition of the carcass ply/plies on a
forming support rotatable about a respective rotation axis, the positioning of the annular anchoring structure on a respective end edge of the carcass ply/plies and the turning of the end edge of the carcass ply/plies about the respective annular anchoring structure.

Hereafter, reference will often be made to tyres comprising a single carcass ply. What is described, however, must be considered to also be valid for tyres comprising many carcass plies.

WO2013/093818 discloses a method, a process and a plant for building tyres. The plant comprises a carcass structure building line including a forming drum, two support elements removably associated with the forming drum in axially opposite positions and a moving device adapted to make the forming drum to rotate about a rotation axis coinciding with the longitudinal symmetry axis of the drum itself and with the rotation axis of the tyre being formed. The moving device comprises a mechanism able to hold one of the support elements stably coupled with the moving device and provided with a quick connection/disconnection device which allows to speed up the set-up operations. The abovementioned support element is stably coupled with the moving device during the various building activities in the carcass structure building line and can be removed from the moving device so as to allow replacement with a different support element when, during the set-up operations, it is desired to build a carcass structure having structural features (for example a different diameter) different from those of the previous carcass structure.

WO 2004/060644 describes an apparatus and a process for building tyres. The apparatus comprises a radially expandable/contractible building drum and a pair of support elements axially movable with respect to the building drum and intended to be arranged at the sides of the building drum to support an end edge of a semi-finished product deposited on the building drum. The building drum rotates integrally with a main shaft. The support elements are arranged coaxially to said main shaft. Each support element comprises an inflatable air chamber for turning one of the end edges of the semi-finished product around a bead core.

US 3,772,125 illustrates a pair of support elements that are rotatable and axially movable with respect to a contractible carcass building drum. The support elements comprise a ferrule and, in radially inner position with respect to the ferrule, a hub provided with a plurality of ply foldover fingers. The hub is axially movable with respect to the ferrule. The ferrule and the hub are brought to a position adjacent to the drum to support the end portions of a carcass ply when it is deposited on the drum. The ferrule and the hub are then moved away from the drum. The hub is then brought close to the drum to allow the aforementioned fingers to come into contact with the end portions of the carcass ply. Thereafter, the ferrule is brought close to the drum to push down the fingers and, consequently, the end portions of the carcass ply.

US 7,837,816 describes a method for building a radial tyre on a building machine provided with an expandable carcass building drum and two support elements, also expandable, arranged on axially opposite sides of the drum to support the end portions of the carcass ply when it is deposited on the drum. The support elements are provided with respective inflatable air chambers to fold the end portions of the carcass ply over respective bead cores.

Another apparatus for producing tyres wherein removable support members are adjacent positioned to the axial ends of a forming support is disclosed in WO 2008/099236 A1.

The Applicant has observed that building high quality tyres requires, among other things, making a carcass structure having a high degree of regularity and uniformity both in the circumferential direction and in the axial direction. For this purpose, according to the Applicant it is necessary to pay particular attention to the positioning and to the joints of the carcass ply on the forming support. The carcass ply, indeed, when deposited on the forming support, has the opposite axial end edges projecting canti-levered from the forming support itself.

The Applicant has verified that in order to make a carcass ply having the desired high degree of regularity and uniformity it is advantageous, in the deposition operations of the ply on the forming support, to use suitable support members for supporting the aforementioned axial end edges of the carcass ply, as for example illustrated in documents WO 2004/060644, US 3,772,125 and US 7,837,816. Such support members indeed, together with the forming support, ensure that the ply is supported along the entire axial extension thereof, thus ensuring a high precision and repeatability of deposition and, consequently, a high quality of the joints.

The Applicant has further observed that the use of the aforementioned support members allows an advantageous automation of the building operations of the carcass structure. In fact, in the absence of such support members the jointing of the axial end edges of the carcass ply would necessarily require a manual intervention, at the expense of the production capacity, the precision and the repeatability of the jointing operation.

The Applicant has however verified that in processes and/or apparatuses in which the building of the carcass structure is carried out in a single work station (hereafter: one stage building processes and/or apparatuses of the single-station type), i.e. without any transferring of the forming support, the provision of the aforementioned support members, if on the one hand facilitates the deposition operations of the carcass ply, on the other hand hinders the subsequent operations of positioning the annular anchoring structure on the respective axial end edge of the carcass ply and turning such an axial end edge of the carcass ply around the respective annular anchoring structure. These last operations indeed require the movement of suitable positioning and turning devices in the areas adjacent to the opposite axial end portions of the forming support, i.e. right in the areas in which the aforementioned support members operate.

The Applicant has also verified that it is desirable to make use of one stage building processes and/or apparatuses of the single-station type since they allow advantageous compactness of the layout, with consequent reduction of the installation costs.

The Applicant has also realized that, in order to be able to readily use, in tyre building processes and in the activities of research and development of new products, pre-existing forming supports without any need for intervention on them, it is advantageous that the aforementioned support members are not directly coupled with the forming support.

The Applicant has nevertheless observed that such support members must be set in rotation with a motion which is synchronous with that of the forming support to allow easy and homogeneous deposition of the carcass ply on the forming support and on the support members.

The Applicant, has finally found that it is possible to support the aforementioned support members in a position close to the forming support and set them in rotation with a motion which is synchronous with that of the forming support by removably coupling the aforementioned support members to respective gripping members specifically provided on opposite sides with respect to the forming support and rotatable about the rotation axis of the forming support with a rotation speed which is in any case synchronised with that of the forming support itself, such gripping members however being disengaged from said forming support.

The present invention therefore relates, in a first aspect thereof, to a process for producing tyres for vehicle wheels, comprising building a carcass structure on a forming support rotatable about a rotation axis.

Preferably, building said carcass structure comprises arranging a pair of support members in a first operative position in which each support member is axially adjacent to a respective axial end portion of said forming support.

Preferably, building said carcass structure comprises depositing said at least one carcass ply on said forming support laying the axial end edges of said at least one carcass ply on said pair of support members.

Preferably, building said carcass structure comprises bringing said pair of support members to a rest position in which each support member is axially distant from said forming support.

Preferably, arranging said pair of support members in said first operative position comprises coupling said support members with respective gripping members disengaged from said forming support and arranged on axially opposite sides with respect to said forming support, said gripping members being rotatable about said rotation axis with a rotation speed synchronised with that of said forming support.

The Applicant believes that the process of the present invention allows carrying out the operations of depositing the carcass ply/plies, positioning the annular anchoring structures and turning each axial end edge of the carcass ply/plies about the respective annular anchoring structure in the design conditions. More specifically, the operations of depositing the carcass ply on the forming support are carried out after having positioned close to the forming support the support members for supporting the axial end edges of the carcass ply, and the operations of positioning the annular anchoring structures and of turning thereof are carried out when the support members are in an "out of working" position. All of this without any need for mechanical interventions on the forming support, thanks to the fact that the aforementioned support members are not directly coupled with the forming support, but they are coupled with gripping members disengaged from the forming support.

In a second aspect thereof, the present invention relates to an apparatus for producing tyres for vehicle wheels, comprising a forming support rotatable about a rotation axis.

Preferably, a deposition device for depositing at least one carcass ply on said forming support is provided.

Preferably, a gripping member decoupled from said forming support and rotatable about said rotation axis is provided in each of the axially opposite areas with respect to the forming support.

Preferably, a support member for supporting an axial end edge of said at least one carcass ply is provided in each of the axially opposite areas with respect to the forming support.

Preferably, said support member is axially movable with respect to said forming support between a first operative position and a rest position.

Preferably, in said first operative position said support member is axially adjacent to a respective axial end portion of said forming support.

Preferably, in said first operative position said support member is coupled with said gripping member.

Preferably, in said rest position said support member is axially distant from the forming support.

Preferably, in said rest position said support member is decoupled from said gripping member.

The Applicant believes that an apparatus of the type described above allows building a carcass structure in the design conditions by using totally conventional forming supports. Indeed, in accordance with what has been discussed above with reference to the process of the present invention, the support of the axial end edges of the various semi-finished products deposited in turn on the forming support is provided by suitable support members that, when necessary, are brought close to the forming support and moved in synchrony with the forming support.

The present invention, in at least one of the aforementioned aspects, can have at least one of the following preferred characteristics.

Preferably, said gripping members are rotatable about said rotation axis independently from said forming support. The need for mechanical interventions on the forming support is thus further reduced, thanks to the fact that the aforementioned support members are not supported and set in rotation by the forming support, while having rotation speed synchronised with that of said forming support.

Preferably, in said first operative position each support member is radially contracted. In particular, such a support member is brought to a diameter substantially equal to that of the forming support, so as to define a deposition surface for the semi-worked product that is substantially rectilinear (i.e. without steps), to the benefit of the precision and uniformity of deposition of the semi-worked product on the forming support.

Preferably, in said rest position each support member is radially expanded. In this way, the support member does not hinder the subsequent carcass structure building operations.

In preferred embodiments of the invention, after having coupled said support members with said gripping members, said forming support and said gripping members are simultaneously driven in rotation through distinct motor groups. In this way, the desired axial support is ensured for all of the semi-finished products deposited in turn on the forming support.

Preferably, said gripping members are driven in rotation simultaneously through distinct motor groups with rotation speeds synchronised with each other.

Preferably, bringing said pair of support members to said rest position comprises moving each gripping member axially away from said forming support. Such a provision makes it possible to bring the support members to a respective axial position which is different from that of the respective end portions of the carcass ply, so as to subsequently allow the removal of the support members from the axially opposite areas with respect to the forming support, thus allowing the members that are each time necessary to complete the building of the carcass structure to be positioned in such areas.

More preferably, bringing said pair of support members to said rest position comprises, after having moved each gripping member axially away from said forming support, decoupling each support member from the respective gripping member.

Preferably, decoupling each support member from the respective gripping member comprises moving each support member radially away from the respective gripping member. This is possible thanks to the prior axial movement of the gripping members with respect to the forming support.

More preferably, decoupling each support member from the respective gripping member comprises, after having moved each support member radially away from the respective gripping member, moving each support member axially away from the respective gripping member. In this way, the support members are brought to an "out of working" position, i.e. to a position such as not to hinder the subsequent building operations of the carcass structure.

In preferred embodiments of the invention, after having brought said support members to said rest position, a respective annular anchoring structure is associated with each of said opposite axial end edges of said at least one carcass ply. Such an operation is made possible by the fact that the support members have been previously brought to the aforementioned "out of working" position.

Preferably, each of said opposite axial end edges of said at least one carcass ply is turned around the respective annular anchoring structure by inflating a respective air chamber. Advantageously, the inflation of the air chamber occurs while the support members are in the "out of working" position, thus avoiding risks of interference between air chamber and support members during the inflation of the air chamber.

Preferably, after the inflation of said air chamber, said air chamber is pressed against said forming support through said support member. An advantageous consolidation of the turned end edge of the carcass ply on the annular anchoring structure and of the latter on the carcass ply is thus achieved. Such consolidation is advantageously obtained using structural elements (indeed, the support members) already provided for carrying out other tasks (supporting the axial end edges of the carcass ply or of other semi-finished products during the deposition on the forming support); this results in an advantageous economy of design and process and in a consequent reduction of the manufacturing and production costs.

In preferred embodiments of the invention, pressing said air chamber against said forming support comprises moving said support member axially from said rest position towards said forming support.

Preferably, moving said support member axially from said rest position towards said forming support comprises bringing said support member to a second operative position in which it is arranged in a radially outer position with respect to a respective axial end portion of said forming support. The pressure exerted on the air chamber is in this way particularly effective, since it is generated by a thrusting force having, on the air chamber, both a substantially axial thrusting component and a substantially radial thrusting component.

In a preferred embodiment thereof the invention comprises:
- building a crown structure comprising at least one belt layer and a tread band;
- associating said carcass structure with said crown structure;
- toroidally shaping said carcass structure and said crown structure.

Preferably, said support member is radially expandable and contractible.

Preferably, said gripping member is axially movable with respect to said forming support.

In preferred embodiments of the invention, a positioning device for positioning an annular anchoring structure on said axial end edge of said at least one carcass ply is provided in each of the axially opposite areas with respect to the forming support.

Preferably, said positioning device is axially movable with respect to said forming support.

Preferably, said positioning device is axially movable with respect to said forming support independently from said gripping member.

Preferably, said gripping member is axially arranged between said forming support and at least one axially outer portion of said positioning device.

More preferably, the gripping member is in an axially inner position with respect to said positioning device when said positioning device is in an axially distal position from the forming support and is axially arranged between an axially inner portion of said positioning device and said axially outer portion when said positioning device is in an axially proximal position to said forming support.

Preferably, a respective inflatable air chamber is provided in each of the axially opposite areas with respect to the forming support.

Preferably, said air chamber is axially arranged between said forming support and said gripping member.

In preferred embodiments of the invention, said air chamber is axially movable with respect to said forming support. Such a provision allows the subsequent removal of the carcass structure from the forming support.

Preferably, when said air chamber is in a position adjacent to said forming support it comprises an axial end portion arranged in a radially inner position with respect to a respective axial end portion of said forming support. Such a partial radial juxtaposition allows an optimal turning of the axial end edge of the carcass ply about the annular anchoring structure upon inflation of the air chamber. The Applicant has realized that the axial length of the area of juxtaposition between axial end portion of the air chamber and axial end portion of the forming support can be considered constant irrespective of the size and type of tyre to be manufactured. Therefore, it is possible to provide for a single operation for adjusting the axial position and the axial stroke of the various members of the apparatus with respect to the forming support for all the sizes of the tyre to be manufactured, using spacers where it is necessary to obtain millimetric adjustment (like for example to compensate the difference in axial positioning of the members for pushing down the end portions of the carcass ply when passing from building a single-ply carcass structure to building a two-ply carcass structure).

Preferably, said air chamber is arranged in radially inner position with respect to said support member when said support member is at said first operative position.

Preferably, said support member is axially movable from said rest position to a second operative position in which it is at least partially arranged in a radially outer position with respect to a respective axial end portion of said forming support.

Preferably, said support member comprises a plurality of first angular sectors arranged circumferentially with respect to one another and radially movable in a synchronous manner.

In preferred embodiments, a respective transfer device able to be selectively coupled with said support member and axially movable with respect to said forming support is provided in each of the axially opposite areas with respect to the forming support.

Preferably, said transfer device comprises a plurality of sliding guides for the radial movement of said first angular sectors.

Preferably, a plurality of second angular sectors arranged circumferentially with respect to one another and fixedly associated with said transfer device is provided.

Preferably, when said support member is radially expanded each of said second angular sectors is circumferentially arranged between two first angular sectors. In this way an advantageous circumferential continuity between first and second angular sectors is obtained, thus allowing an effective thrusting action on the air chamber, with no risks of damaging the latter.

Preferably, a reinforcing ring is fixedly associated with a radially outer surface of said second angular sectors. Such a reinforcing ring gives the second angular sectors, and the first angular sectors circumferentially interposed to the second angular sectors, a greater structural strength when thrusting the air chamber.

Preferably, said reinforcing ring is arranged at a free axial end portion of said second angular sectors.

Further characteristics and advantages of the present invention will become clearer from the following detailed description of preferred embodiments thereof, made with reference to the attached drawings. In such drawings:
- figure 1 is a schematic side view, partially in section, of a portion of an apparatus for producing a tyre in accordance with the present invention, in a first operative configuration thereof;
- figures 2-3 and 4-18 are schematic views, partially in section, of the portion of the apparatus of figure 1 in successive operative configurations;
- figures 3a and 3b are section views of a detail of the apparatus of figure 1 in two different operative configurations;
- figures 19 and 20 are perspective views of a further detail of the apparatus of figure 1 in two different operative configurations.

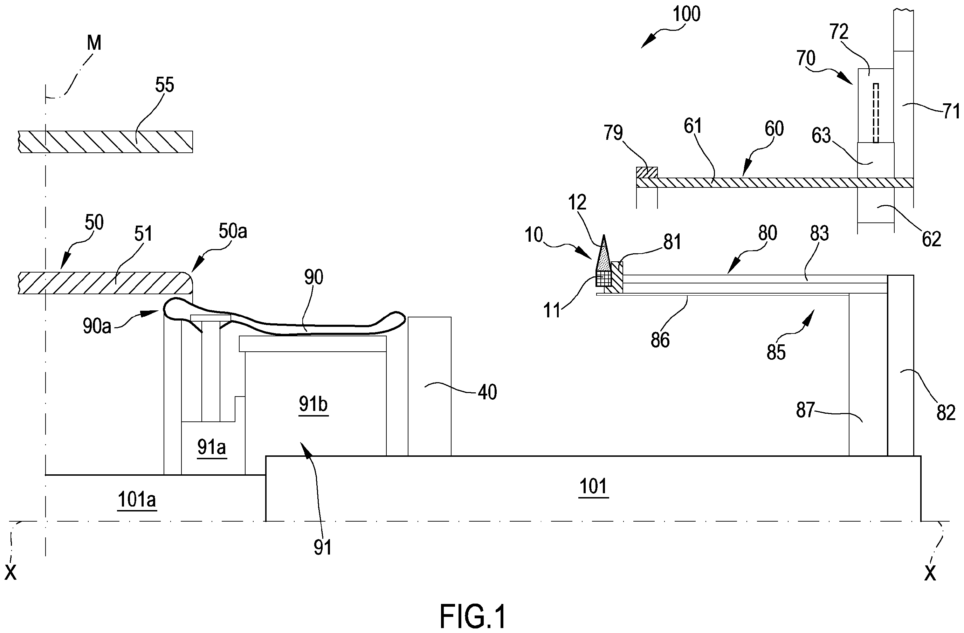

In figures 1-18, reference numeral 100 wholly indicates a portion of an embodiment of an apparatus for producing tyres for vehicle wheels in accordance with the present invention.

The apparatus 100 can be used in a process for producing tyres for vehicles, preferably four-wheeled heavy load vehicles (like trucks, articulated lorries, buses, trailers) or light load vehicles (like automobiles, vans). However, the apparatus 100 can be also used in production processes of tyres for two-wheeled vehicles, in particular motorcycles.

Specifically, the apparatus 100 is used for building a carcass structure of the tyre.

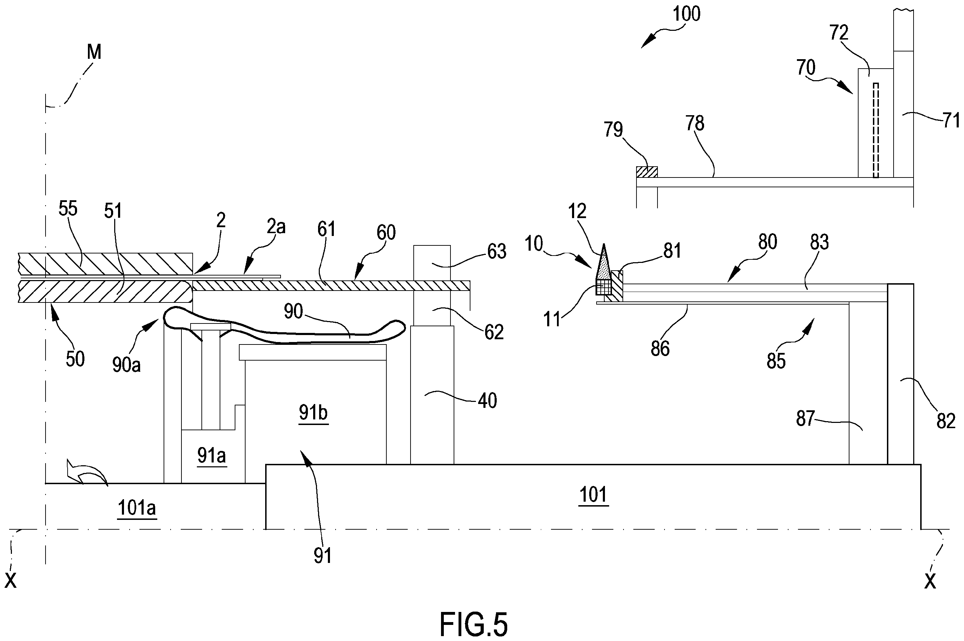

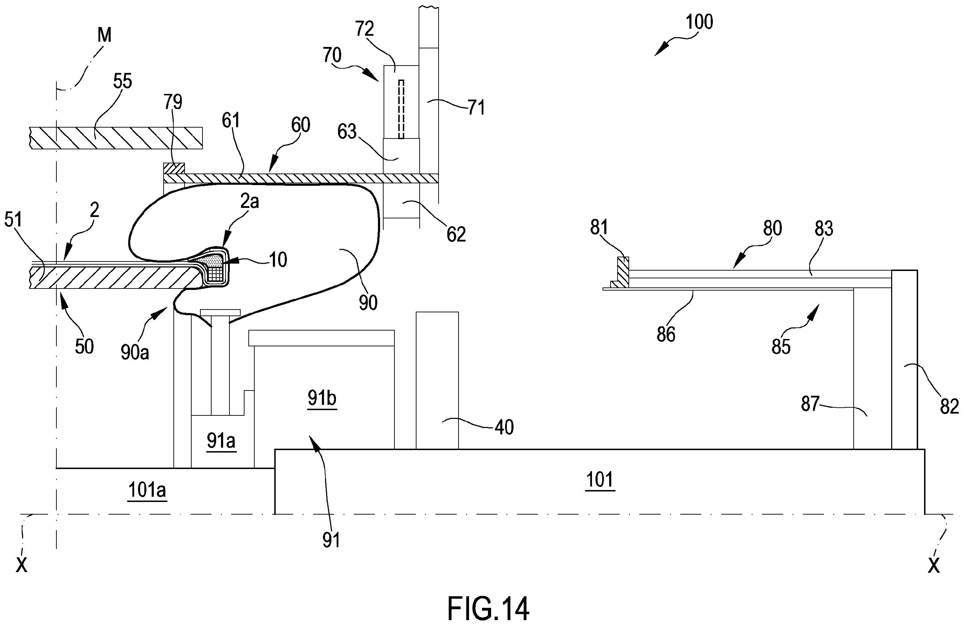

With reference to figures 5-17, the carcass structure comprises at least one carcass ply 2 including reinforcing cords incorporated in a matrix of elastomeric material. Each carcass ply 2 has axial end edges 2a turned around respective annular anchoring structures 10 provided to allow the tyre to be mounted and held in/on the rim of the wheel (figures 14-17).

Each annular anchoring structure 10 is formed of a substantially circumferential annular insert 11 (or bead core) on which at least one filling insert 12 is applied, in radially outer position thereof.

A semi-finished product comprising for example the so-called liner, under-liner and anti-abrasion layer (and generally called "complex") is preferably provided in a radially inner position with respect to the carcass ply 2. Alternatively, the aforementioned liner, under-liner and anti-abrasion layer can consist of layers distinct from each other. Hereafter, for the sake of simplicity of illustration reference numeral 2 will be associated to the assembly comprising the carcass ply and the complex or the various layers that define the liner, the under-liner and the anti-abrasion layer and generic reference will be made to the carcass ply to indicate the aforementioned assembly.

Preferably, one or more reinforcing structures (not shown) are arranged in a radially outer position with respect to the carcass ply 2 at the axial end edges 2a thereof. Each reinforcing structure is preferably arranged in an axially inner position with respect to the filling insert 12 of the annular anchoring structure 10.

With reference to figures 1-18, the apparatus 100 comprises a forming support 50 having, preferably, a substantially cylindrical shape.

The forming support 50 is rotatable about a rotation axis X-X and is supported by a first drive shaft 101a associated with a mandrel group 101 and, on the axially opposite side, by a second driven shaft (not shown) associated with a tailstock group (not shown). The drive shaft 101a, the mandrel group 101, the driven shaft and the tailstock group are all coaxial to the rotation axis X-X of the forming support 50.

Preferably, the mandrel group 101 is stably associated with the ground, whereas the tailstock group is slidably mounted on an axial sliding guide stably associated with the ground. The axial movement of the tailstock group allows the axial withdrawal of the driven shaft from the forming support 50, which in this case remains supported by only the drive shaft 101a. It is thus possible to axially withdraw the carcass structure from the forming support 50 and, if necessary, the forming support 50 from the drive shaft 101a, to proceed with the subsequent building operations of the tyre.

The rotation of the forming support 50 about the rotation axis X-X is driven by a suitable motor group (not shown).

As shown in figures 1-18, as far as the present invention is concerned the apparatus 100 is symmetrical with respect to a middle plane M of the forming support 50 (apart from the mandrel group 101, the tailstock group and the aforementioned sliding guide) and with respect to the rotation axis X-X of the forming support 50. For the sake of simplicity of description, the present invention will therefore be described and illustrated in figures 1 to 18 with reference to only one of the sides of the apparatus 100 with respect to the middle plane M (in particular, the side to the right of the middle plane M) and to the upper part of the apparatus 100 with respect to the rotation axis X-X.

The forming support 50 preferably comprises a plurality of angular sectors (one of them, indicated with 51, is shown in figures 1-18) circumferentially adjacent to each other and radially movable in a synchronous manner to give the forming support 50 the capability to expand and contract radially.

The apparatus 100 comprises, in a radially outer position with respect to the forming support 50, a device 55 for depositing the carcass ply/plies 2 on the forming support 50. In particular, at least one carcass ply 2 previously cut to size is deposited on the forming support 50 through the device 55. In the case of building multi-ply tyres, the operation is repeated in succession many times.

The ply/plies is/are jointed on the forming support 50. In the specific example herein illustrated, before depositing the aforementioned ply/plies, the complex or, alternatively, the various layers that define the liner, the under-liner and the anti-abrasion layer is/are deposited on the forming support 50.

Once deposited on the forming support 50, each of the aforementioned carcass plies 2 has the opposite axial end edges 2a thereof which project axially from the forming support 50 (figures 5-10).

The apparatus 100 comprises, in each of the axially opposite areas with respect to the forming support 50, a support member 60 for supporting a respective axial end edge 2a of each carcass ply 2 (figure 5).

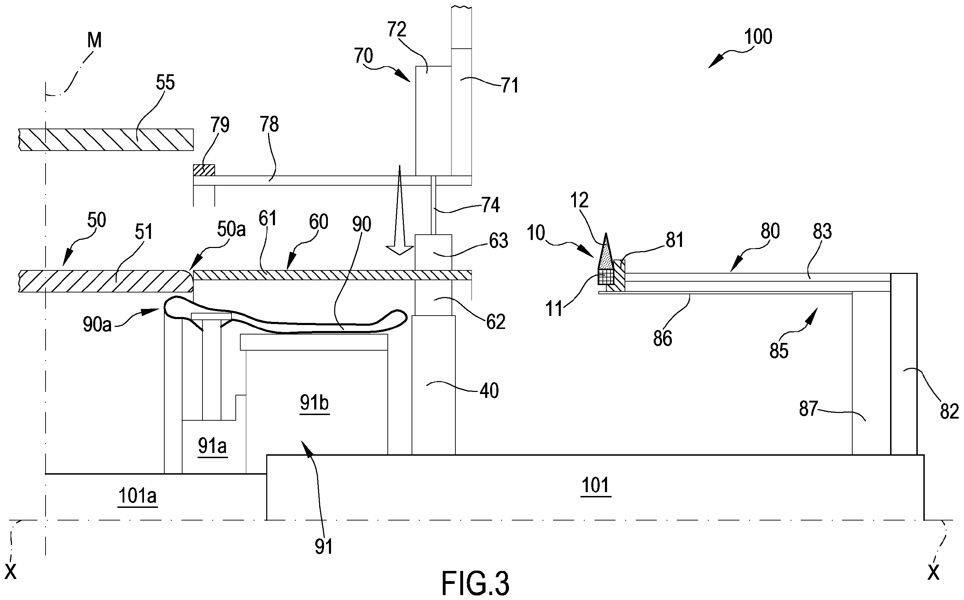

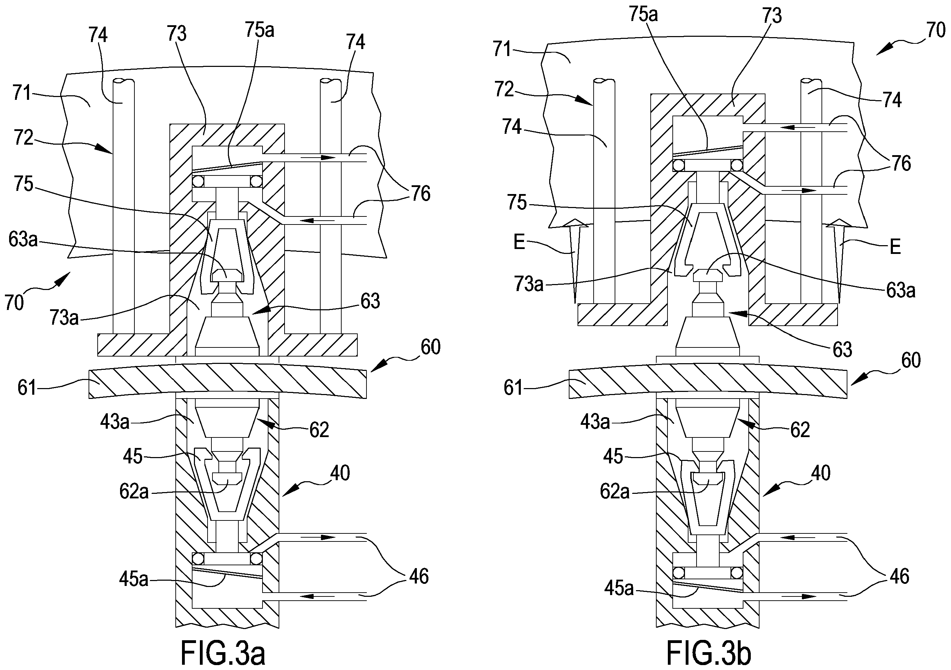

As described hereafter, each support member 60 is axially movable with respect to the forming support 50 between an operative position in which the support member 60 is axially adjacent to a respective axial end portion 50a of the forming support 50 (figures 3-5) and a rest position in which the support member 60 is axially distant from the forming support 50 (figures 1, 9-13 and 15-18).

Each support member 60 is also radially expandable/contractible so as to be able to have, in said operative position, a first diameter equal to that of the forming support 50 and, in said rest position, a diameter greater than the aforementioned first diameter.

In this way, when the support member 60 is in the operative position it can support the respective axial end edge 2a of the carcass ply 2, which in the contrary case would project canti-levered from the forming support 50. When, on the other hand, the support member 60 is in the rest position it does not hinder the subsequent building operations of the carcass structure. Such a rest position is identified hereafter as "out of working" position.

The apparatus 100 further comprises, in each of the axially opposite areas with respect to the forming support 50, a respective transfer device 70 capable of being selectively coupled with the support member 60 and axially movable with respect to the forming support 50 so as to bring the support member 60 close to the forming support 50, before depositing the carcass ply 2 on the forming support 50, and in the "out of working" position, after having deposited the carcass ply 2 on the forming support 50.

Preferably, each transfer device 70 is slidably mounted on an air rail (not shown). The axial movement of the support member 60 towards and away from the forming support 50 is thus carried out as a consequence of the sliding of the respective transfer device 70 on the aforementioned rail.

Of course, the axial movement of the transfer device 70 can be obtained through other solutions different to the one described above, for example by sliding on rails associated with the ground. The use of an air rail is, however, preferred as it does not take up space on the ground.

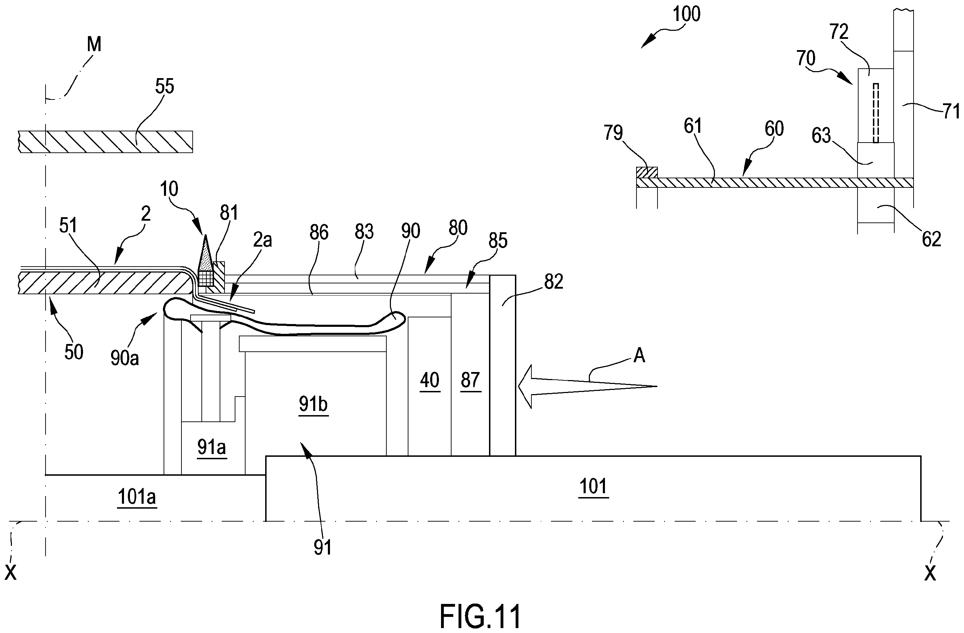

The apparatus 100 further comprises, in each of the axially opposite areas with respect to the forming support 50, a respective positioning device 80 for positioning the annular anchoring structure 10 on an axial end edge 2a of the carcass ply 2 after such an axial end edge 2a has been suitably pushed down (figure 11).

The positioning device 80 comprises, at an axially inner portion thereof, a holding member 81 for holding the annular anchoring structure 10 and, at an axially outer portion thereof, a ring nut 82 slidably mounted on the mandrel group 101. The holding member 81 is fixedly associated with the ring nut 82 through an axial arm 83.

The positioning device 80 is axially movable with respect to the forming support 50. The axial movement of the positioning device 80 towards the forming support 50 is indicated with the arrow A in figure 11.

The apparatus 100 further comprises, in each of the axially opposite areas with respect to the forming support 50, a respective pushing down device 85 for pushing down the axial end edge 2a of the carcass ply 2.

The pushing down device 85 comprises a plurality of elastically deformable fingers 86 fixedly associated with a ring nut 87 slidably mounted on the mandrel group 101 in an axially inner position with respect to the ring nut 82 of the positioning device 80.

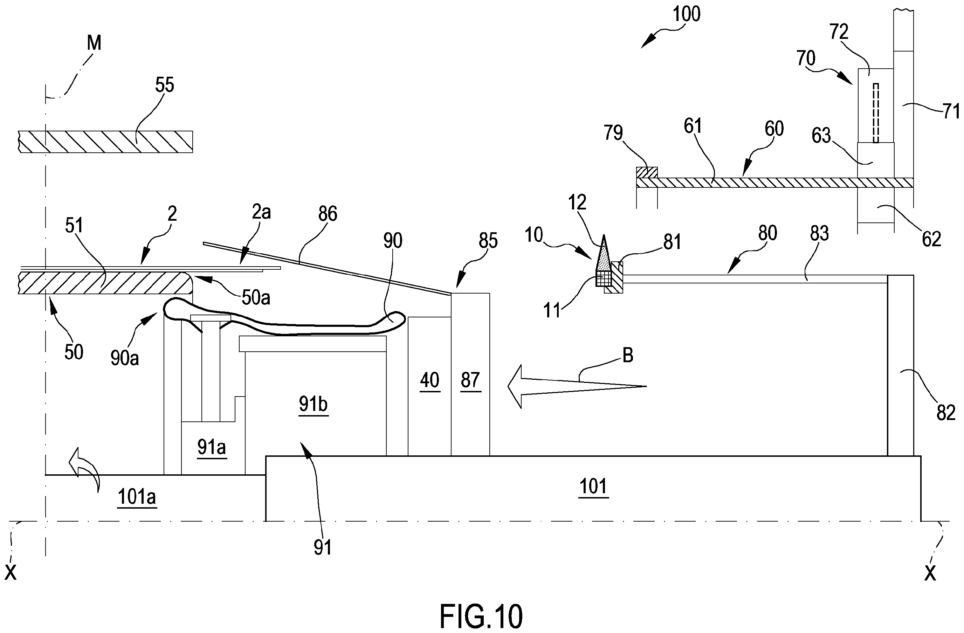

The pushing down device 85 is axially mobile with respect to the forming support 50 independently from the positioning device 80. The axial movement of the pushing down device 85 towards the forming support 50 is indicated with the arrow B in figure 10.

When the pushing down device 85 is in a distal position with respect to the forming support 50 (figures 1-9), the fingers 86 are kept in a contracted condition by the holding member 81, which is in a radially outer position with respect to the fingers 86 and in radial abutment against the latter. When the pushing down device 85 is brought to a position proximal to the forming support 50 (figure 10), the fingers 86 open due to their elastic deformability, positioning partially into a radially outer position with respect to the axial end edge 2a of the carcass ply 2. When also the positioning device 80 is brought to a position proximal to the forming support 50 (figure 11), the holding member 81 causes the contraction of the fingers 86. Such a contraction in turn causes the pushing down of the axial end edge 2a of the carcass ply 2 and allows the annular anchoring structure 10 to be positioned on the axial end edge 2a of the carcass ply 2, at a side shoulder of the axial end portion 50a of the forming support 50.

The apparatus 100 further comprises, in each of the axially opposite areas with respect to the forming support 50, a respective inflatable air chamber 90.

The air chamber 90 is associated with a base member 91 which is slidably mounted on the mandrel group 101 in an axially inner position with respect to the ring nut 87 of the pushing down device 85.

The base member 91 comprises an inflating portion 91a for inflating the air chamber 90 and a support portion 91b for supporting the air chamber 90 when it is deflated.

The air chamber 90 is axially movable with respect to the forming support 50 independently from the positioning device 80 and from the pushing down device 85.

When the air chamber 90, with the respective base member 91, is in a position proximal to the forming support 50, an axially inner end portion 90a of the air chamber 90 is arranged in a radially inner position with respect to a respective axial end portion 50a of the forming support 50, as shown in figures 1-15.

The air chamber 90 is in a radially inner position with respect to the support member 60 when the support member 60 is the operative position thereof (figures 3-5). The air chamber 90 is also in a radially inner position with respect to the holding device 81 and to the fingers 86 when they are in a position axially adjacent to the forming support 50 (figure 11).

The apparatus 100 further comprises, in each of the axially opposite areas with respect to the forming support 50, a respective gripping member 40 which is disengaged from the forming support 50. Such a gripping member 40 is slidably mounted on the mandrel group 101 and can be selectively coupled with the support member 60 to support and set in rotation the support member 60 during the deposition of the carcass ply 2 on the forming support 50 and to transfer the support member 60 to the transfer device 70 in order to bring the support member 60 to the "out of working" position.

Each gripping member 40 is axially movable with respect to the forming support 50 independently from the positioning device 80, from the pushing down device 85 and from the air chamber 90.

The gripping member 40 is axially arranged between the air chamber 90 (and the respective base group 91) and the positioning and pushing down devices 80, 85 when they are in an axially distal position from the forming support 50 (figures 1-9). When the positioning and pushing down devices 80, 85 are, on the other hand, brought to a position proximal to the forming support 50 (figure 11), the gripping member 40 is in a radially inner position with respect to the fingers 86 and axially arranged between the holding member 81 and the ring nuts 82 and 87.

Each gripping member 40 can be driven in rotation about the rotation axis X-X, preferably independently from the forming support 50. For this purpose, a suitable motor group (not shown) is provided, said motor group being distinct from the motor group which drives in rotation the forming support 50. Preferably, the motor group driving in rotation the gripping member 40 is also distinct from the one which drives in rotation the gripping member arranged on the axially opposite side with respect to the forming support 50.

The rotation of the two gripping members 40 during the deposition of the carcass ply 2 on the forming support 50 is synchronised with that of the forming support 50. In particular, the gripping members 40 are driven in rotation with an angular velocity which is equal to that of the forming support 50.

The support member 60, the transfer device 70 and the gripping member 40 will be described in greater detail below.

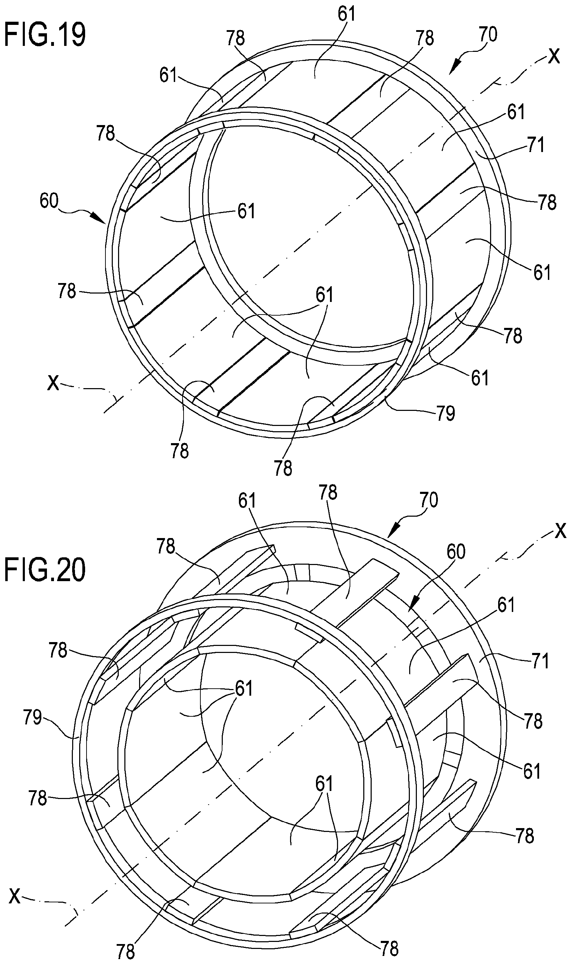

With particular reference to figures 19 and 20, the support member 60 comprises a plurality of angular sectors 61 (eight sectors in the specific embodiment shown in figures 19 and 20) arranged circumferentially with respect to one another and radially movable in a synchronous manner, so as to give the support member 60 the capability of radially expanding and contracting. The number of angular sectors 61 is preferably comprised between 8 and 12, each sector preferably having an angular extension between 45° and 30°.

With reference to figure 3a, 3b, each angular sector 61 comprises, in a radially inner position thereof, a coupling element 62 for coupling with the gripping member 40 and, in a radially outer position thereof, a coupling element 63 for coupling with the transfer device 70. For the sake of simplicity of illustration, the coupling elements 62 and 63 are not shown in figures 19 and 20, whereas they are only schematically depicted in figures 1-18.

Each coupling element 62, 63 comprises, at a respective free end thereof, a locking pin 62a, 63b.

The transfer device 70 comprises a flange 71 and, fixedly associated with the flange 71, a plurality of circumferentially adjacent sustaining members 72, each sustaining member 72 being arranged at a respective angular sector 61.

Each sustaining member 72 comprises a trolley 73 able to slide along radial sliding guides 74. The trolley 73 comprises a shaped housing 73a and, inside such a shaped housing 73a, a pliers 75 which can be moved radially by means of a suitable control device 76, for example a pneumatic device. A spring 75a holds the pliers 75 open (figure 3b). When the control device 76 is actuated so as to cause a movement of the pliers 75 in a radially outward direction against the elastic force exerted by the spring 75a, the contact of the pliers 75 with the walls of the shaped housing 73a causes the closing of the pliers 75 (figure 3a).

Similarly, the gripping member 40 comprises a plurality of circumferentially adjacent shaped housings 43a, each shaped housing 43a being arranged at a respective angular sector 61. Inside each shaped housing 43a there is a pliers 45 which can be moved radially through the effect of a suitable control device 46, for example a pneumatic device. A spring 45a holds the pliers 45 open (figure 3a). When the control device 46 is actuated so as to cause a movement of the pliers 45 in a radially outwards direction against the elastic force exerted by the spring 45a, the contact of the pliers 45 with the shaped walls of the housing 43a causes the closing of the pliers 45 (figure 3b).

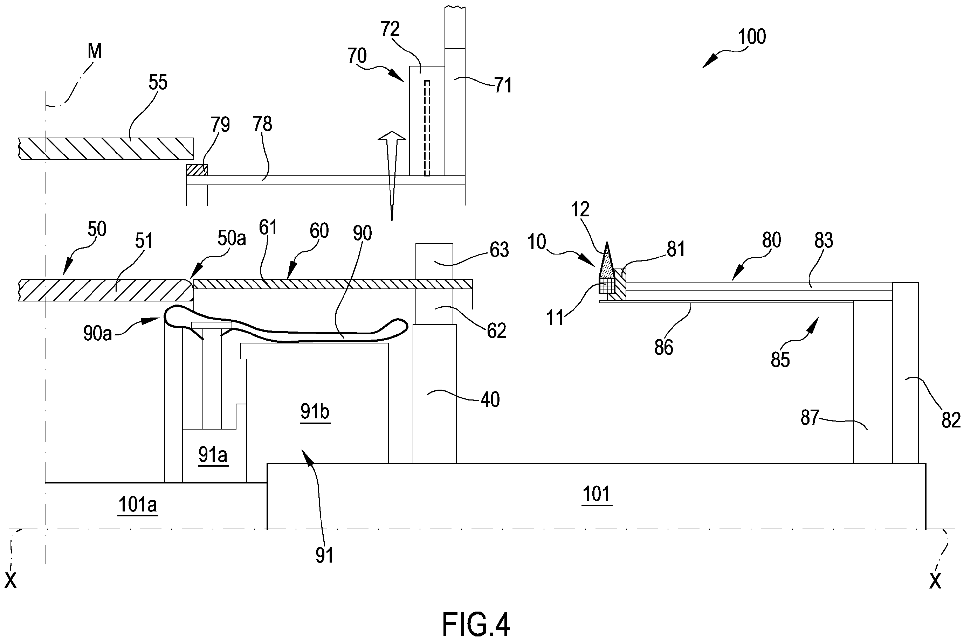

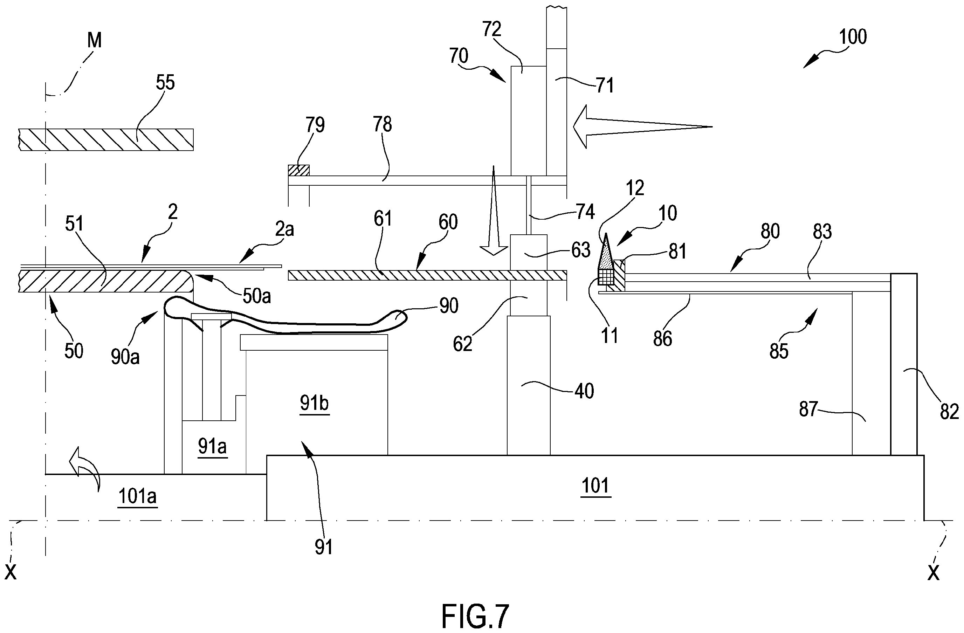

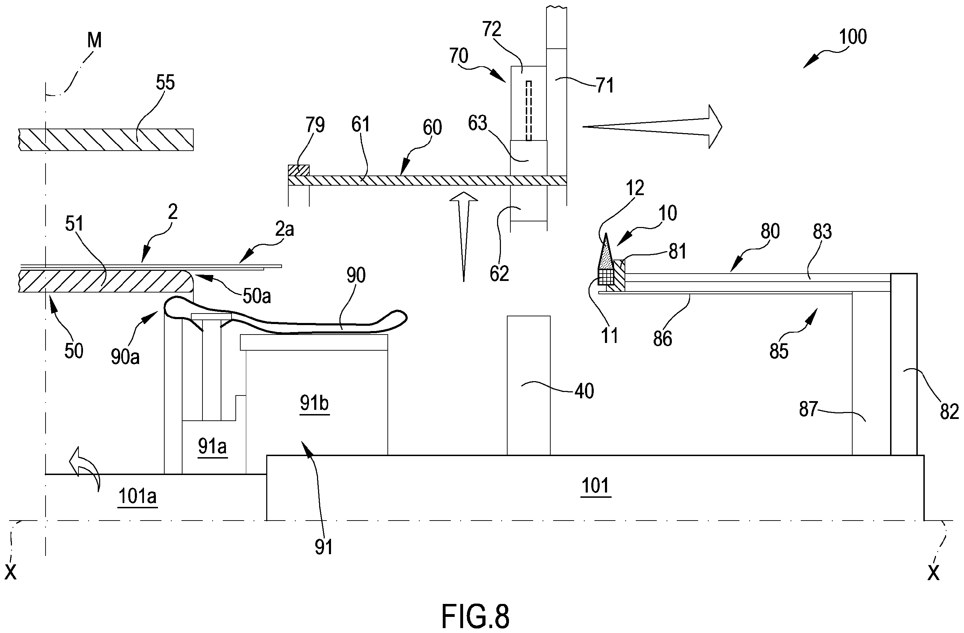

Figure 3a shows an operative configuration in which the angular sector 61 of the support member 60, coupled with the transfer device 70 (note the closed pliers 75 that grips the pin 63a), is on the point of being coupled with the gripping member 40 (note the open pliers 45 decoupled from the pin 62a) and of being left by the transfer device 70. Such an operative configuration corresponds to the one shown in figure 3. Figure 3b, on the other hand, shows the immediately subsequent operative configuration, in which the angular sector 61 of the support member 60 is coupled with the gripping member 40 (note the closed pliers 45 that grips the pin 62a) and has been left by the transfer device 70 (note the open pliers 75 decoupled from the pin 63a) which is moving in a radially outward direction. Such an operative configuration corresponds to the one shown in figure 4. Figure 3b can also identify the operative configuration shown in figure 7, in which the transfer device 70 is on the point of being coupled with the angular sector 61 of the support member 60 coupled with the gripping member 40 (note the closed pliers 45 that grips the pin 62a and the open pliers 75 decoupled from the pin 63a). In this case, the two arrows E which are depicted in figure 3b will have a direction opposite to the one illustrated. Consistently, figure 3a also identifies the immediately subsequent operative configuration (prior to the configuration of figure 8), in which the angular sector 61 of the support member 60 is coupled with the transfer device 70 (note the closed pliers 75 that grips the pin 63a) and decoupled from the gripping member 40 (note the open pliers 45 decoupled from the pin 62a).

With particular reference to figures 19 and 20, a plurality of angular sectors 78 are fixedly associated with the transfer device 70. Such angular sectors project canti-levered from the flange 71 and are circumferentially arranged with respect to one another at the radially expanded position of the angular sectors 61 so that, when the latter are in the radially expanded position, the angular sectors 78 are circumferentially interposed between the angular sectors 61. This last condition is shown in figure 19, whereas figure 20 shows the condition in which the angular sectors 61 are radially contracted.

As shown in figure 14, the transfer device 70, together with the support member 60 in the operative configuration in which the angular sectors 61 are radially expanded, acts as a thrusting element for thrusting the inflated air chamber 90. Such a thrusting action causes the squashing of the air chamber 90 against the forming support 50 and, consequently, the completion of the turning of the axial end edges 2a of the carcass ply 2 around the annular anchoring structure 10. The transfer device 70 in this case is brought to an operative position in which it is at least partially arranged in a radially outer position with respect to the respective axial end portion 50a of the forming support 50.

As better shown in figures 19 and 20, a reinforcing ring 79 is associated with the radially outer surface of the angular sectors 78 at the respective free axial end portions thereof to give the annular assembly defined by the angular sectors 61 and angular sectors 78 the desired structural strength in response to the stresses imparted by the inflated air chamber 90 when the latter is squashed against the forming support 50.

A preferred embodiment of a process for producing a tyre in accordance with the present invention will be described below. Said process can be carried out through the apparatus 100 described above.

Such a process at first comprises building the carcass structure of the tyre on the forming support 50. For the sake of simplicity, reference will be made to the operations that take place at only one of the sides of the apparatus 100 with respect to the middle plane M. It should be understood that the operations described take place simultaneously also at the other side of the apparatus 100.

As shown in figure 1, building the carcass structure initially comprises providing the forming support 50 based on the tyre to be built while the support member 60 is supported by the transfer device 70 in the rest or out of working position thereof (i.e. in the operative configuration in which the angular sectors 61 are radially expanded and the support member 60 is in an axially distal position from the forming support 50).

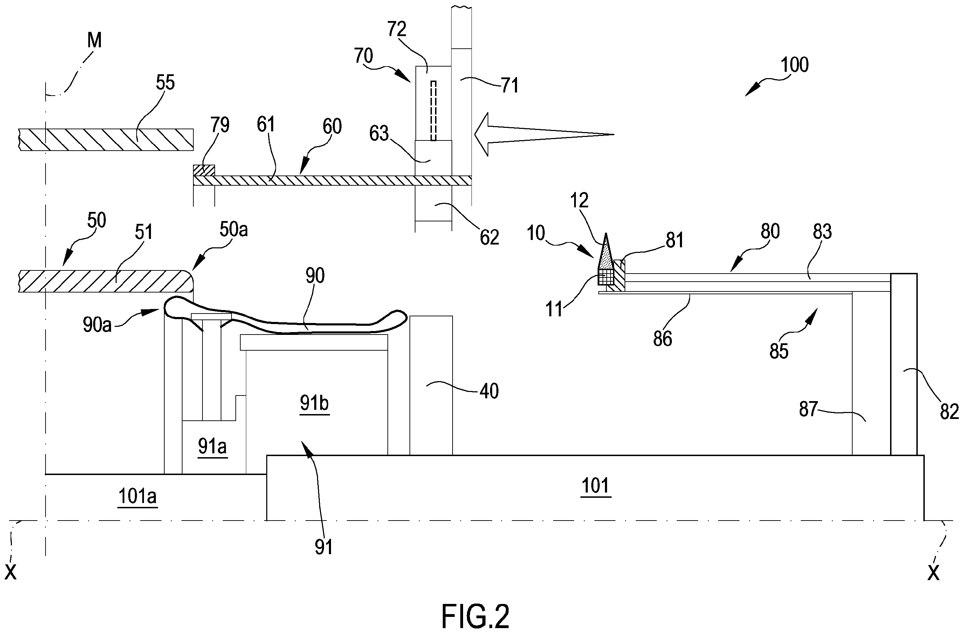

Thereafter, the transfer device 70 is moved towards the forming support 50 (figure 2) and the angular sectors 61 of the support member 60 are radially contracted (figure 3) up to reach a diameter equal to that of the forming support 50, thus being in a position axially adjacent to the axial end portion 50a of the forming support 50.

In order to bring the support member 60 in the operative position of figure 3 the pliers 75 of the transfer device 70 is kept clamped on the pin 63a. When the operative configuration of figure 3 is reached the pin 62a of the angular sectors 61 is positioned in the housing 43a of the gripping member 40, in particular inside the pliers 45, which in such an operative configuration 40 is open (figure 3a).

Thereafter, as shown in figure 3b, each angular sector 61 of the support member 60 is coupled with the gripping member 40. This happens by clamping the pliers 45 and thus gripping the pin 62a of the angular sectors 61. At the same time, the pliers 75 of the transfer device 70 is opened and the transfer device 70 is moved radially away from the support member 60 (figure 4).

The transfer device 70 is subsequently moved axially away from the forming support 50 and the deposition of the carcass ply 2 on the forming support 50 (and possibly of the complex or of the layers respectively defining the liner, the under-liner and the anti-abrasion layer) proceeds, by the deposition device 55, laying the axial end edges 2a of the carcass ply 2 (and possibly of the complex or of the layers respectively defining the liner, the under-liner and the anti-abrasion layer) on the two support members 60, thus reaching the operative configuration shown in figure 5.

During such deposition operations, the forming support 50 and the two support members 60 rotate simultaneously about the rotation axis X-X, preferably independently from each other, with synchronised rotation speeds. Each support member 60 is held and set in rotation by a respective gripping member 40 and provides the desired support to a respective axial end edge 2a of the carcass ply 2.

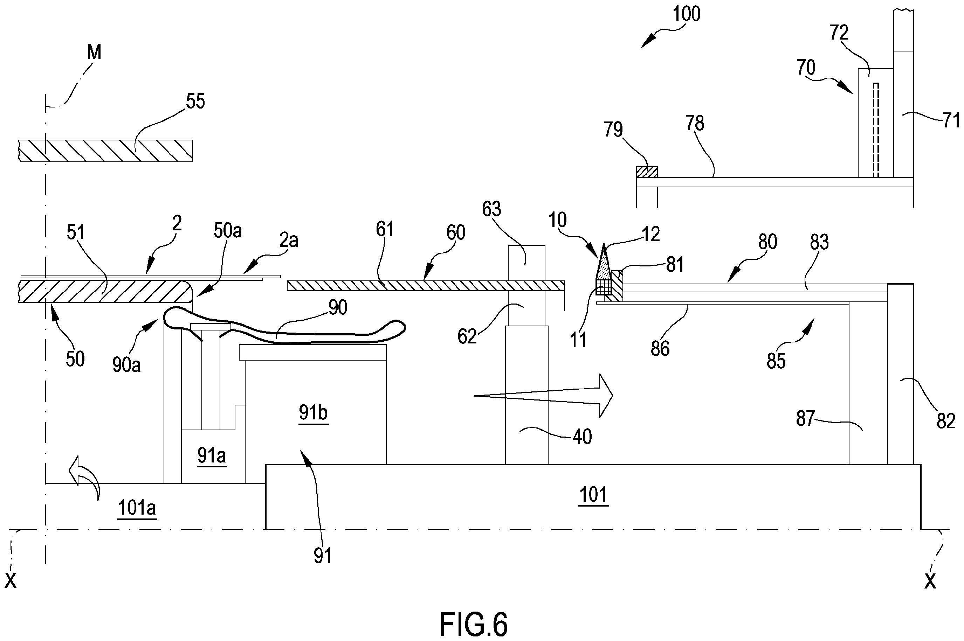

At the end of the aforementioned deposition operations, the support member 60 is moved axially away from the forming support 50 (figure 6). At the same time, the transfer device 70 is brought axially close to the forming support 50 and the mobile trolley 73 is radially moved until the pliers 75 is brought close to the pin 63a of the angular sectors 61 of the support member 60 (figure 3b with the arrows E oriented in the opposite direction).

Thereafter, the pliers 45 of the gripping member 40 is opened and the pliers 75 of the transfer device is closed, clamping the pin 63a of the angular sectors 61 of the support member 60 (figure 3a).

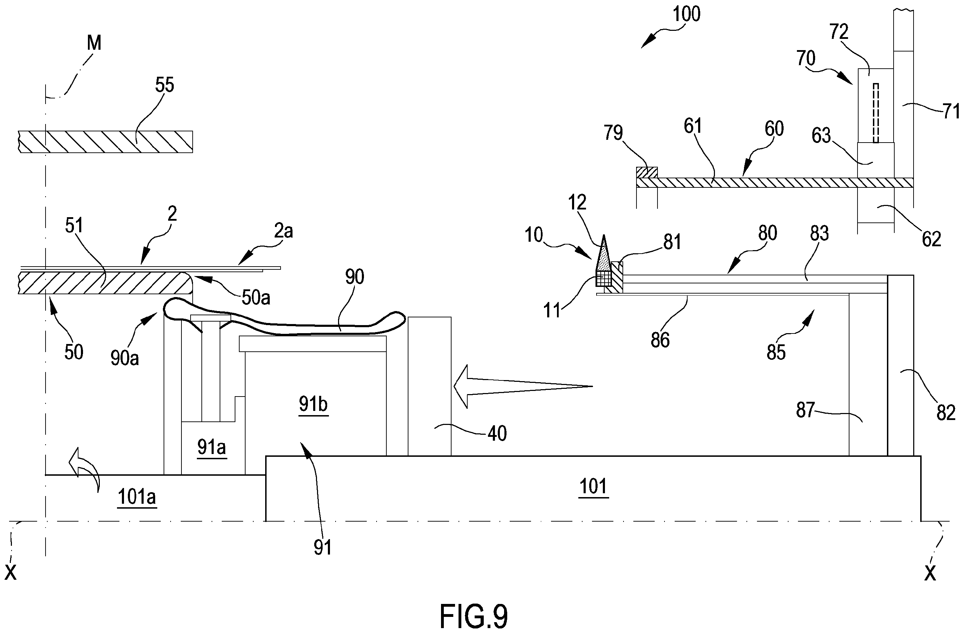

The support member 60 is then picked up by the transfer device 70 and decoupled from the gripping member 40. In particular, the support member 60 is firstly moved radially away from the gripping member 40 and it is radially expanded (figure 8). Thereafter support member 60 is moved axially until it is brought to the rest position thereof (figure 9). In such an operative position the support member 60 is in the operative configuration indicated above as "out of working".

At this time it is possible to proceed with the positioning of the annular anchoring structure 10 on the axial end edge 2a of the carcass ply 2. Firstly, the pushing down device 85 is moved axially towards the forming support 50 (figure 10) and thereafter, the axial end edge 2a of the carcass ply 2 is pushed down through the fingers 86 and the annular anchoring structure 10 is positioned on the axial end edge 2a of the carcass ply 2, in particular at the shoulder of the axially outer portion 50a of the forming support 50. As described above the pushing down of the axial end edge 2a of the carcass ply 2 by the fingers 86 is caused the thrust exerted on the fingers 86 by the holding member 81 as a consequence of the axial movement of the positioning device 80 towards the forming support 50 (figure 11).

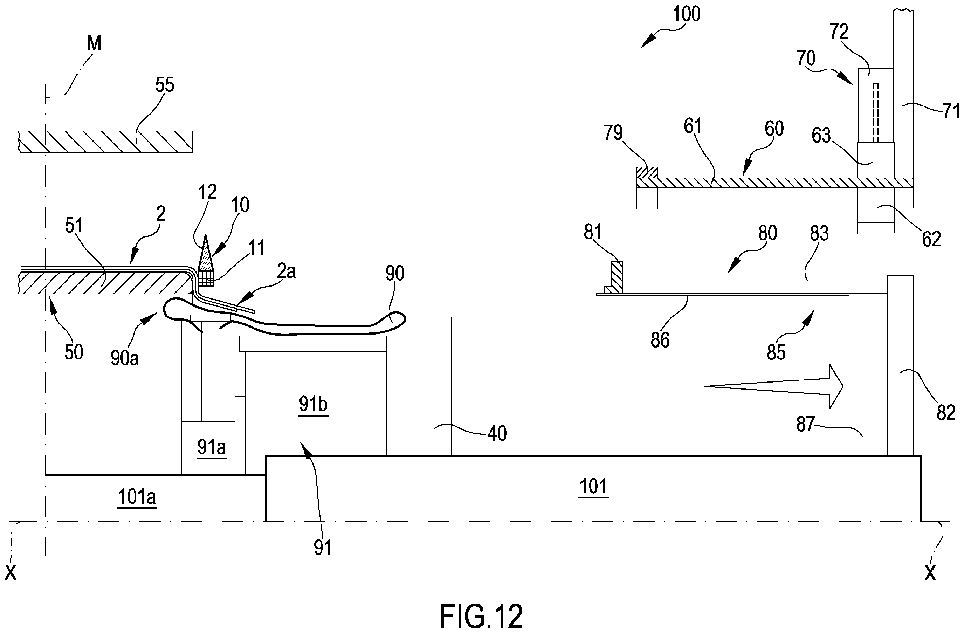

Thereafter, the positioning device 80 and the pushing down device 85 are moved away from the forming support 50, as shown in figure 12.

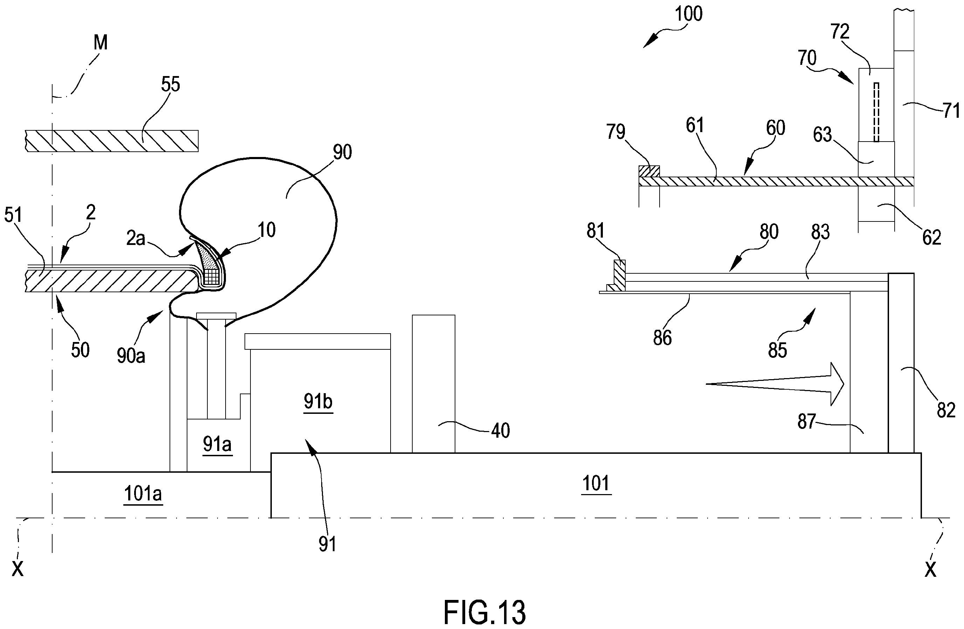

At this time, the air chamber 90 is inflated (figure 13). Such inflation causes the turning of the axial end edge 2a of the carcass ply 2 around the annular anchoring structure 10.

After the air chamber 90 has been inflated it is pressed against the forming support 50 (figure 14). Such an operation is advantageously carried out by axially moving the transfer device 70 until the free end portions of the angular sectors 61 (in the radially expanded condition) and of the angular sectors 78 are arranged in a radially outer position with respect to the axial end portion 50a of the forming support 50. In this way, a uniform and homogeneous thrust on the air chamber 90 along the entire circumferential extension thereof is obtained, causing the compacting of the turned axial end edge 2a of the carcass ply 2 around the annular anchoring structure 10 and the simultaneous pushing down of the filling insert 12 on the carcass ply 2.

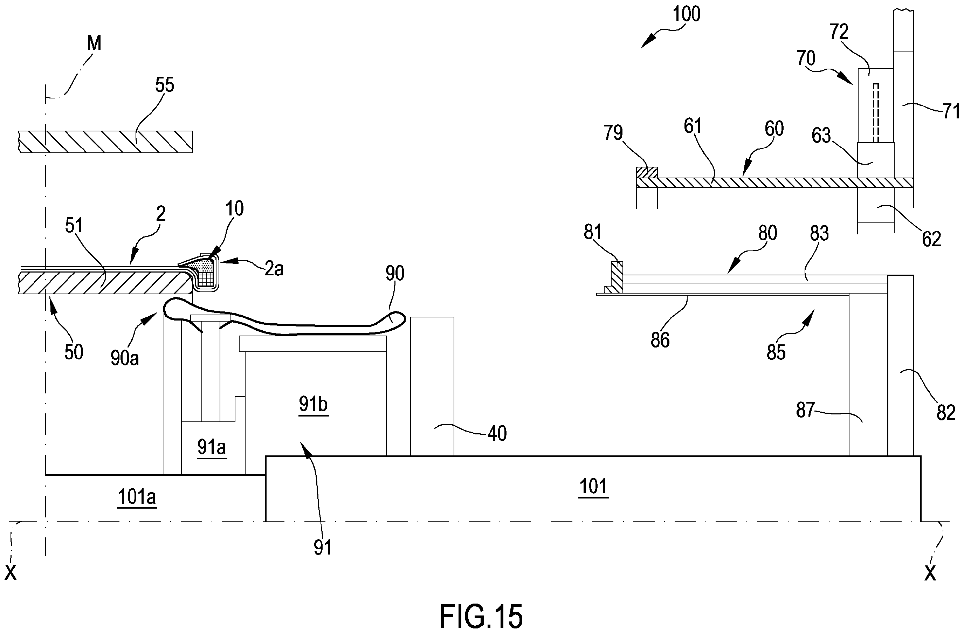

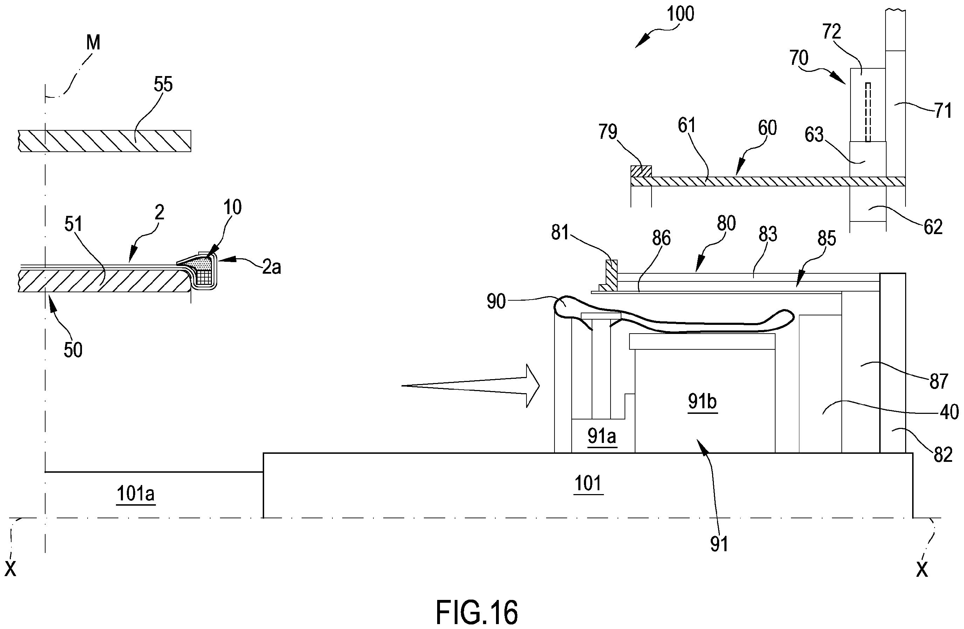

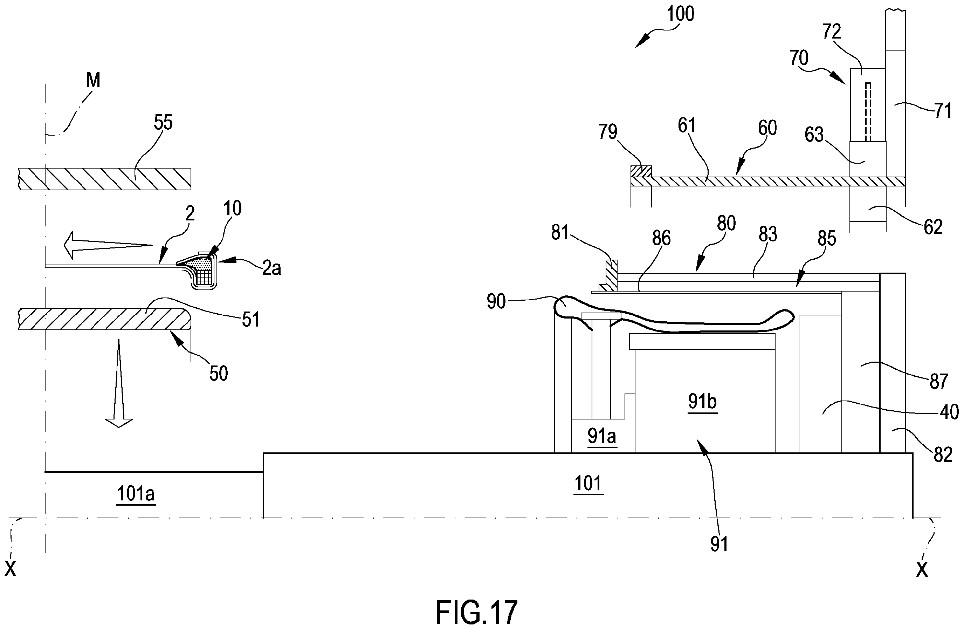

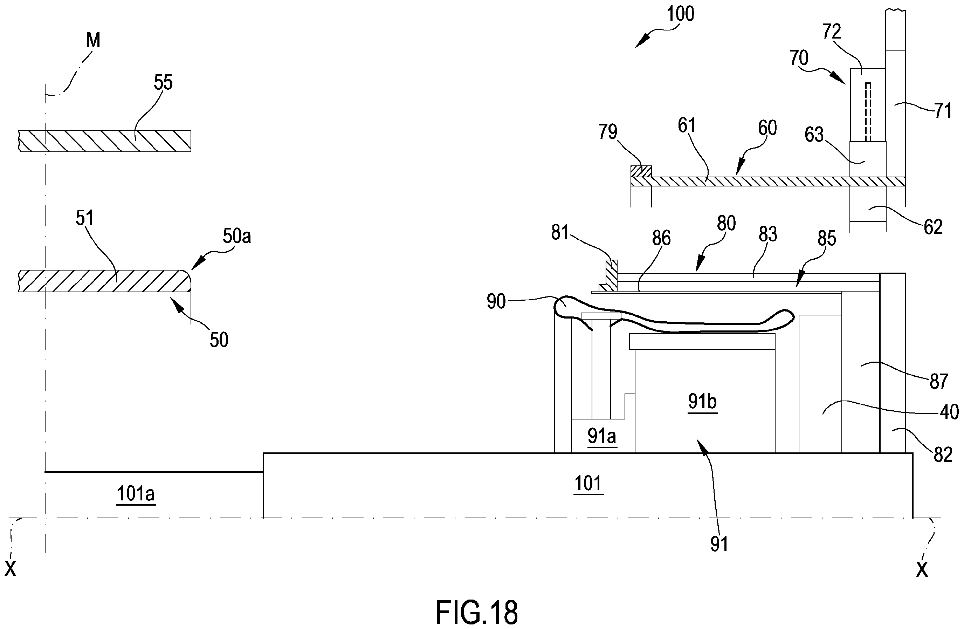

Thereafter, the transfer device 70 is moved away from the forming support 50 (figure 15). The air chamber 90 is then moved axially away (figure 16) and the forming support is radially contracted (figure 17) to detach from the carcass structure, which can thus be picked up (figures 17 and 18).

Once the building of the carcass structure on the forming support 50 is complete, the carcass structure is arranged in a radially inner position with respect to a crown structure comprising at least one belt layer and, in radially outer position with respect to the at least one belt layer, a tread band. The carcass structure is then associated with the crown structure and shaped toroidally together with the crown structure, for example in a suitable shaping drum. The green tyre thus built is then subjected to a moulding and vulcanization process in order to obtain a finished tyre.

Of course, a man skilled in the art can bring further modifications and variants to the invention described above in order to satisfy specific and contingent application requirements, said variants and modifications in any case being within the scope of protection as defined by the following claims.

## Claims

1. Process for producing tyres for vehicle wheels, comprising building a carcass structure on a forming support (50) rotatable about a rotation axis (X-X), wherein building said carcass structure comprises:
- arranging a pair of support members (60) in a first operative position in which each support member (60) is axially adjacent to a respective axial end portion (50a) of said forming support (50);
- depositing said at least one carcass ply (2) on said forming support (50) laying axial end edges (2a) of said at least one carcass ply (2) on said pair of support members (60);
- bringing said pair of support members (60) to a rest position in which each support member (60) is axially distant from said forming support (50);
wherein arranging said pair of support members (60) in said first operative position comprises coupling said support members (60) with respective gripping members (40) disengaged from said forming support (50) and arranged on axially opposite sides with respect to said forming support (50), said gripping members (40) being rotatable about said rotation axis (X-X) with a rotation speed synchronised with that of said forming support (50).

2. Process according to claim 1, wherein in said first operative position each support member (60) is radially contracted.

3. Process according to claim 1 or 2, wherein in said rest position each support member (60) is radially expanded.

4. Process according to any one of the previous claims, comprising, after having coupled said support members (60) with said gripping members (40), simultaneously driving in rotation said forming support (50) and said gripping members (40) through distinct motor groups.

5. Process according to any one of the previous claims, wherein said gripping members (40) are driven in rotation simultaneously through distinct motor groups with mutually synchronised rotation speeds.

6. Process according to any one of the previous claims, wherein bringing said pair of support members (60) to said rest position comprises:
- moving each gripping member (40) axially away from said forming support (50).

7. Process according to any one of the previous claims, comprising, after having brought said support members (60) to said rest position, associating a respective annular anchoring structure (10) with each of said opposite axial end edges (2a) of said at least one carcass ply (2).

8. Apparatus (100) for producing tyres for vehicle wheels, comprising:
- a forming support (50) rotatable about a rotation axis (X-X);
- a deposition device (55) for depositing at least one carcass ply (2) on said forming support (50);
the apparatus (100) further comprising, in each of axially opposite areas with respect to the forming support (50):
- a gripping member (40) disengaged from said forming support (50) and rotatable about said rotation axis (X-X);
- a support member (60) for supporting an axial end edge (2a) of said at least one carcass ply (2);
wherein said support member (60) is axially movable with respect to said forming support (50) between a first operative position in which said support member (60) is axially adjacent to a respective axial end portion (50a) of said forming support (50) and is coupled with said gripping member (40), and a rest position in which said support member (60) is axially far from the forming support (50) and is de-coupled from said gripping member (40).

9. Apparatus (100) according to claim 8, comprising, in each of the axially opposite areas with respect to the forming support (50), a positioning device (80) for positioning an annular anchoring structure (10) on said axial end edge (2a) of said at least one carcass ply (2).

10. Apparatus (100) according to claim 9, wherein said positioning device (80) is axially movable with respect to said forming support (50) independently from said gripping member (40).

11. Apparatus (100) according to claim 9 or 10, wherein said gripping member (40) is axially arranged between said forming support (50) and at least one axially outer portion of said positioning device (80).

12. Apparatus according to claim 11, wherein each gripping member (40) is in an axially inner position with respect to said positioning device (80) when said positioning device (80) is in an axially distal position from to the forming support (50) and each gripping member (40) is axially arranged between an axially inner portion of said positioning device (80) and said axially outer portion when said positioning device (80) is in an axially proximal position to said forming support (50).

13. Apparatus (100) according to any one of claims 8 to 12, comprising, in each of the axially opposite areas with respect to the forming support (50), a respective inflatable air chamber (90).

14. Apparatus (100) according to claim 13, wherein said air chamber (90) is axially arranged between said forming support (50) and said gripping member (40).

15. Apparatus (100) according to any one of claims 8 to 14, comprising, in each of the axially opposite areas with respect to the forming support (50), a respective transfer device (70) able to be selectively coupled with said support member (60) and axially movable with respect to said forming support (50).

## Patentansprüche

1. Verfahren zur Herstellung von Reifen für Fahrzeugräder, umfassend ein Aufbauen einer Karkassenstruktur auf einem formgebenden Träger (50), der um eine Drehachse (X-X) drehbar ist, wobei das Aufbauen der Karkassenstruktur umfasst:
- Anordnen eines Paares Stützelemente (60) in einer ersten Betriebsstellung, in der jedes Stützelement (60) axial benachbart zu einem jeweiligen axialen Endabschnitt (50a) des formgebenden Trägers (50) ist;
- Ablegen der mindestens einen Karkassenlage (2) auf dem formgebenden Träger (50), wobei die axialen Endkanten (2a) der mindestens einen Karkassenlage (2) auf das Paar Stützelemente (60) gelegt werden;
- Bringen des Paares Stützelemente (60) in eine Ruhestellung, in der jedes Stützelement (60) von dem formgebenden Träger (50) axial beabstandet ist;
wobei das Anordnen des Paares Stützelemente (60) in der ersten Betriebsstellung ein Koppeln der Stützelemente (60) mit jeweiligen Greifelementen (40) umfasst, die von dem formgebenden Träger (50) gelöst und auf axial in Bezug auf den formgebenden Träger (50) gegenüberliegenden Seiten angeordnet sind, wobei die Greifelemente (40) um die Drehachse (X-X) mit einer Drehgeschwindigkeit drehbar sind, die mit der des formgebenden Trägers (50) synchronisiert ist.

2. Verfahren nach Anspruch 1, wobei in der ersten Betriebsstellung jedes Stützelement (60) radial kontrahiert ist.

3. Verfahren nach Anspruch 1 oder 2, wobei in der Ruhestellung jedes Stützelement (60) radial expandiert ist.

4. Verfahren nach einem der vorhergehenden Ansprüche, das nach dem Koppeln der Stützelemente (60) mit den Greifelementen (40) ein gleichzeitiges rotatorisches Antreiben des formgebenden Trägers (50) und der Greiforgane (40) durch verschiedene Motorgruppen umfasst.

5. Verfahren nach einem der vorhergehenden Ansprüche, wobei die Greifelemente (40) durch verschiedene Motorgruppen mit zueinander synchronisierten Drehzahlen gleichzeitig rotatorisch angetrieben werden.

6. Verfahren nach einem der vorhergehenden Ansprüche, wobei das Bringen des Paares Stützelemente (60) in die Ruhestellung umfasst,
- jedes Greifelement (40) axial von dem formgebenden Träger (50) weg zu bewegen.

7. Verfahren nach einem der vorhergehenden Ansprüche, das, nachdem die Stützelemente (60) in die Ruhestellung gebracht worden sind, ein Verbinden einer jeweiligen ringförmigen Verankerungsstruktur (10) mit jeder der gegenüberliegenden axialen Endkanten (2a) der mindestens einen Karkassenlage (2) umfasst.

8. Vorrichtung (100) zur Herstellung von Reifen für Fahrzeugräder, umfassend:
- einen um eine Drehachse (X-X) drehbaren formgebenden Träger (50);
- eine Ablageeinrichtung (55) zum Ablegen mindestens einer Karkassenlage (2) auf dem formgebenden Träger (50);
wobei die Vorrichtung (100) ferner in jedem von axial in Bezug auf den formgebenden Träger (50) gegenüberliegenden Bereichen Folgendes umfasst:
- ein Greifelement (40), das von dem formgebenden Träger (50) gelöst und um die Drehachse (X-X) drehbar ist;
- ein Stützelement (60) zum Abstützen einer axialen Endkante (2a) der mindestens einen Karkassenlage (2);
wobei das Stützelement (60) axial in Bezug auf den formgebenden Träger (50) beweglich ist, und zwar zwischen einer ersten Betriebsstellung, in welcher das Stützelement (60) axial einem jeweiligen axialen Endabschnitt (50a) des formgebenden Trägers (50) benachbart ist und mit dem Greifelement (40) gekoppelt ist, und einer Ruhestellung, in welcher das Stützelement (60) axial fern vom formgebenden Träger (50) ist und von dem Greifelement (40) entkoppelt ist.

9. Vorrichtung (100) nach Anspruch 8, umfassend, in jedem der axial in Bezug auf den formgebenden Träger (50) gegenüberliegenden Bereiche, eine Positioniereinrichtung (80) zum Positionieren einer ringförmigen Verankerungsstruktur (10) an der axialen Endkante (2a) der mindestens einen Karkassenlage (2).

10. Vorrichtung (100) nach Anspruch 9, wobei die Positioniereinrichtung (80) unabhängig von dem Greifelement (40) axial in Bezug auf den formgebenden Träger (50) beweglich ist.

11. Vorrichtung (100) nach Anspruch 9 oder 10, wobei das Greifelement (40) axial zwischen dem formgebenden Träger (50) und mindestens einem axial äußeren Abschnitt der Positioniereinrichtung (80) angeordnet ist.

12. Vorrichtung nach Anspruch 11, wobei jedes Greifelement (40) sich an einer axial inneren Position in Bezug auf die Positioniereinrichtung (80) befindet, wenn die Positioniereinrichtung (80) sich an einer vom formgebenden Träger (50) axial fernen Position befindet, und jedes Greifelement (40) axial zwischen einem axial inneren Abschnitt der Positioniereinrichtung (80) und dem axial äußeren Abschnitt angeordnet ist, wenn die Positioniereinrichtung (80) sich an einer zu dem formgebenden Träger (50) axial nahen Position befindet.

13. Vorrichtung (100) nach einem der Ansprüche 8 bis 12, umfassend, in jedem der axial in Bezug auf den formgebenden Träger (50) gegenüberliegenden Bereiche, eine jeweilige aufblasbare Luftkammer (90).

14. Vorrichtung (100) nach Anspruch 13, wobei die Luftkammer (90) axial zwischen dem formgebenden Träger (50) und dem Greifelement (40) angeordnet ist.

15. Vorrichtung (100) nach einem der Ansprüche 8 bis 14, die in jedem der axial in Bezug auf den formgebenden Träger (50) gegenüberliegenden Bereiche eine jeweilige Übertragungseinrichtung (70) umfasst, die sich wahlweise mit dem Stützelement (60) koppeln lässt und in Bezug auf den formgebenden Träger (50) axial beweglich ist.

## Revendications

1. Procédé de production de pneus pour roues de véhicule, comprenant la construction d'une structure de carcasse sur un support de formation (50) pouvant tourner autour d'un axe de rotation (X-X), où la construction de ladite structure de carcasse comprend le fait :
- d'agencer une paire d'éléments de support (60) dans une première position opérationnelle dans laquelle chaque élément de support (60) est axialement adjacent à une partie d'extrémité axiale respective (50a) dudit support de formation (50) ;
- de déposer ledit au moins un pli de carcasse (2) sur ledit support de formation (50) en posant des bords d'extrémité axiaux (2a) dudit au moins un pli de carcasse (2) sur ladite paire d'éléments de support (60) ;
- d'amener ladite paire d'éléments de support (60) dans une position de repos dans laquelle chaque élément de support (60) est axialement éloigné dudit support de formation (50) ;
dans lequel l'agencement de ladite paire d'éléments de support (60) dans ladite première position opérationnelle comprend le couplage desdits éléments de support (60) avec des éléments de préhension respectifs (40) désengagés dudit support de formation (50) et agencés sur des côtés axialement opposés par rapport audit support de formation (50), lesdits éléments de préhension (40) pouvant tourner autour dudit axe de rotation (X-X) avec une vitesse de rotation synchronisée avec celle dudit support de formation (50) .

2. Procédé selon la revendication 1, dans lequel, dans ladite première position opérationnelle, chaque élément de support (60) est contracté radialement.

3. Procédé selon la revendication 1 ou 2, dans lequel, dans ladite position de repos, chaque élément de support (60) est dilaté radialement.

4. Procédé selon l'une quelconque des revendications précédentes, comprenant, après avoir couplé lesdits éléments de support (60) auxdits éléments de préhension (40), le fait d'entraîner simultanément en rotation ledit support de formation (50) et lesdits éléments de préhension (40) par différents groupes moteurs.

5. Procédé selon l'une quelconque des revendications précédentes, dans lequel lesdits éléments de préhension (40) sont entraînés en rotation simultanément par des groupes moteurs distincts avec des vitesses de rotation mutuellement synchronisées.

6. Procédé selon l'une quelconque des revendications précédentes, dans lequel le fait d'amener ladite paire d'éléments de support (60) dans ladite position de repos comprend le fait :
- d'éloigner axialement chaque élément de préhension (40) dudit support de formation (50).

7. Procédé selon l'une quelconque des revendications précédentes, comprenant, après avoir amené lesdits éléments de support (60) dans ladite position de repos, le fait d'associer une structure d'ancrage annulaire respective (10) à chacun desdits bords d'extrémité axiaux opposés (2a) dudit au moins un pli de carcasse (2).

8. Appareil (100) de production de pneus pour roues de véhicule, comprenant :
- un support de formation (50) pouvant tourner autour d'un axe de rotation (X-X) ;
- un dispositif de dépôt (55) pour déposer au moins un pli de carcasse (2) sur ledit support de formation (50) ;
l'appareil (100) comprenant en outre, dans chacune des zones axialement opposées par rapport au support de formation (50) :
- un élément de préhension (40) désengagé dudit support de formation (50) et pouvant tourner autour dudit axe de rotation (X-X) ;
- un élément de support (60) pour supporter un bord d'extrémité axial (2a) dudit au moins un pli de carcasse (2) ;
dans lequel ledit élément de support (60) est axialement mobile par rapport audit support de formation (50) entre une première position opérationnelle dans laquelle ledit élément de support (60) est axialement adjacent à une partie d'extrémité axiale respective (50a) dudit support de formation (50) et est couplé audit élément de préhension (40), et une position de repos dans laquelle ledit élément de support (60) est axialement éloigné du support de formation (50) et est découplé dudit élément de préhension (40).

9. Appareil (100) selon la revendication 8, comprenant, dans chacune des zones axialement opposées par rapport au support de formation (50), un dispositif de positionnement (80) pour positionner une structure d'ancrage annulaire (10) sur ledit bord d'extrémité axial (2a) dudit au moins un pli de carcasse (2).

10. Appareil (100) selon la revendication 9, dans lequel ledit dispositif de positionnement (80) est axialement mobile par rapport audit support de formation (50) indépendamment dudit élément de préhension (40).

11. Appareil (100) selon la revendication 9 ou 10, dans lequel ledit élément de préhension (40) est axialement agencé entre ledit support de formation (50) et au moins une partie axialement extérieure dudit dispositif de positionnement (80).

12. Appareil selon la revendication 11, dans lequel chaque élément de préhension (40) est dans une position axialement intérieure par rapport audit dispositif de positionnement (80) lorsque ledit dispositif de positionnement (80) est dans une position axialement distale par rapport au support de formation (50) et chaque élément de préhension (40) est axialement agencé entre une partie axialement intérieure dudit dispositif de positionnement (80) et ladite partie axialement extérieure lorsque ledit dispositif de positionnement (80) est dans une position axialement proximale audit support de formation (50).

13. Appareil (100) selon l'une quelconque des revendications 8 à 12, comprenant, dans chacune des zones axialement opposées par rapport au support de formation (50), une chambre à air gonflable respective (90).

14. Appareil (100) selon la revendication 13, dans lequel ladite chambre à air (90) est axialement agencée entre ledit support de formation (50) et ledit élément de préhension (40).

15. Appareil (100) selon l'une quelconque des revendications 8 à 14, comprenant, dans chacune des zones axialement opposées par rapport au support de formation (50), un dispositif de transfert respectif (70) apte à être sélectivement couplé audit élément de support (60) et axialement mobile par rapport audit support de formation (50) .
